# EUROPEAN PATENT APPLICATION

(11) **EP 4 672 115 A2**
(43) Date of publication of application: **31.12.2025**
(21) Application number: 25201574.8
(22) Date of filing: 11.09.2025
(51) Int. Cl.: G06Q 10/20, G06Q 30/018, H04L 9/00, H04L 9/40

(54) **SYSTEM AND METHOD FOR ORCHESTRATING MAINTENANCE PROCESSES OF VEHICLE COMPONENTS**

(71) Applicant: WINGLEET SAS, 75015 Paris (FR)
(72) Inventor: BATTY, Sébastien, 75015 Paris (FR); MONTESANO, Vincent, 75015 Paris (FR)
(74) Representative: Dennemeyer & Associates S.A.

(57) **Abstract**

The invention relates to a computer-implemented method for orchestrating stakeholders and owners in the management of vehicles, components, and associated maintenance events using a blockchain-based infrastructure. The method is executed by a plurality of smart contract modules deployed on a distributed ledger system. The method comprises authenticating a user via a dedicated interface (100x), including verification through an organization registry module (1016); identifying a vehicle component by acquiring a component identifier via UID, RFID or QR scanning; retrieving component information from a component registry module (1010); verifying whether the user is authorized to initiate maintenance based on ownership data; submitting maintenance data to a maintenance workflow module (1008) as a signed blockchain-compatible transaction; recording the maintenance event on the distributed ledger with a unique event identifier; updating the vehicle configuration via a vehicle management module (1012) to reflect component replacement or installation; and notifying an operator through an operator interface (1004) of the committed maintenance event.

## Description

### Technical Field

The invention generally relates to a system and method for orchestrating the maintenance and lifecycle management of technical components used in complex industrial systems or vehicles.

In particular, the invention relates to a system and method leveraging distributed ledger technologies to track, manage, and certify maintenance events (such as replacement, overhaul, inspection, or transfer of ownership) associated with individual components. Such a system can be designed to be interoperable across all stakeholders involved in the lifecycle of the component, including manufacturers, operators, maintenance providers, and regulators.

Herein, orchestrating maintenance processes of vehicle components can be defined as managing vehicle components and maintenance events via a blockchain-based infrastructure

### Background of the Invention

The configuration or operational state of a complex asset-such as a vehicle, industrial machine, or vehicle-refers to the complete and current list of components, subsystems or subassemblies and configurations installed at a given point in time. This configuration data is critical for ensuring proper maintenance scheduling, operational safety, and regulatory compliance. For assets that change ownership or operators during their lifecycle, such as leased vehicle or modular vehicles, maintaining an accurate and verifiable record of installed components and maintenance history is essential to avoid disputes, ensure continuity of operations, and preserve asset value. Maintenance teams and operators must rely on trusted configuration data before performing inspections, repairs, upgrades, or regulatory audits.

Currently, there is no universally adopted method for maintaining and exchanging configuration records across complex industrial sectors. In aviation specifically, each stakeholder may rely on proprietary systems, internal data standards, and fragmented processes to track event-based maintenance, journey logs, ownership history, and operational status-resulting in siloed and inconsistent records. As a result, the configuration state of a vehicle or component is often maintained inconsistently, depending on each stakeholder's practices. While some enforce strict data governance, others may apply manual or irregular updates. These discrepancies are further exacerbated when assets are transferred between stakeholders, with limited interoperability between their systems. This lack of harmonization leads to manual inspections, time-consuming reconciliation of fragmented records, and uncertainty regarding compliance. It increases the risk of data loss, duplicated work, and regulatory gaps-especially during audits, ownership changes, or operational transitions. Despite the criticality of this information, the industry still relies heavily on paper documents, standalone digital tools, and disconnected systems, hindering real-time traceability and trust.

An additional challenge arises from the fact that technical components are frequently transferred between stakeholders, whether through leasing contracts, operational pooling, resale, or efforts to optimize asset utilization. In such cases, each stakeholder may maintain and document the component's maintenance history using different systems, data models, or compliance practices. This fragmentation makes it increasingly difficult to preserve a complete, accurate, and tamper-resistant history for each component over time. The lack of continuity and data standardization across stakeholders weakens the reliability of maintenance records, increases compliance risk, and reduces the overall traceability of safety-critical assets.

The challenges stemming from fragmented maintenance records and incompatible data practices across stakeholders underscore the need for a unified and verifiable system to maintain component lifecycle records-independently of asset ownership or operational changes. To ensure regulatory compliance, operational continuity, and auditability, each maintenance action, installation, transfer, or inspection event must be recorded in a manner that is tamper-evident, time-stamped, and securely accessible by authorized stakeholders. Such a system must enable interoperability across independent entities while maintaining a trusted, shared source of truth for each component throughout its lifecycle. Ideally, this approach could form the basis for an industry-wide standard, improving data consistency, reducing administrative burden, and enabling seamless communication between stakeholders across organizational and technological boundaries.

Blockchain technology provides a robust foundation for the secure and auditable management of lifecycle events involving technical components. A blockchain is a distributed, cryptographically linked ledger that stores immutable records of transactions, each block including a timestamp, transaction payload, and a hash linking it to the previous block-making unauthorized alteration computationally infeasible. Unlike traditional centralized systems, blockchain infrastructures can be deployed as permissioned networks, enabling role-based access and governance across organizations while ensuring end-to-end traceability. **In** regulated industries such as aerospace, this architecture supports auditability, decentralized trust, and secure interoperability across heterogeneous stakeholders. Furthermore, blockchain provides tamper-proof evidence of actions such as maintenance tasks or ownership transfers and enables automated verification mechanisms through smart contracts. Such systems can integrate with enterprise software platforms-commonly referred to as ERP (Enterprise Resource Planning) systems-that are used by industrial actors to manage operations, inventory, and maintenance. Blockchain technology can thus improve data reliability, reduce compliance costs, and enhance transparency without requiring major changes to existing operational tools and workflows.

European Patent Application EP3543924A1 describes a vehicle configuration and activity history tracking system utilizing blockchain technology. In one embodiment, the system comprises software running on a data processing system that reads and compares vehicle configuration and history blockchains from multiple nodes in a blockchain network. **The** system verifies the integrity of the data by comparing versions of the blockchain across nodes. If the blockchain is deemed valid, the system permits initiation of maintenance operations or modifications based on the validated configuration data. In another embodiment, a node in the blockchain network determines whether a requesting software system is authorized to access the blockchain data and, if so, provides the relevant information. This approach supports decentralized integrity verification and secure access control for configuration and activity history data.

While EP3543924A1 addresses general vehicle configuration tracking using blockchain, it does not enable secure and automated management of maintenance and configuration data. In particular, there remains a technical gap for a system which provides an immutable audit trail of all maintenance events, secure identity verification for technicians and organizations, and real-time access to maintenance status for all authorized stakeholders. Such a system must support interoperability across different actors in the aviation ecosystem, while protecting commercially sensitive data.

### Object of the Invention

It is an object of the invention is to provide a system and method for orchestrating the maintenance, operation, and lifecycle of technical components in complex assets, ensuring that each event, such as maintenance, transfer, or installation or removal are recorded in a structured, verifiable, and tamper-evident manner, regardless of the stakeholder involved.

Specifically, an aspect of the invention pertains to a computer-implemented method for managing vehicle components and maintenance events via a blockchain-based infrastructure, the method being executed by a plurality of smart contract modules deployed on a distributed ledger system, the method comprising the steps of:
- authenticating a user via a dedicated interface, comprising:
   - transmitting user credentials to an organization registry module via an application programming interface,
   - verifying organizational affiliation and role of the user, and
   - receiving an authentication token;
- identifying a vehicle component by acquiring a component identifier using an UID, RFID or QR code applied to a tag on the component;
- retrieving component information from a component registry module (1010), the component information comprising at least an operational status and a current ownership identifier;
- verifying, based on the authentication token, whether the authenticated user is authorized to initiate maintenance on the component, by comparing a unique organization ID associated with the user against ownership data stored in the component registry;
- submitting maintenance data, to a maintenance workflow module, the maintenance data being structured as a blockchain-compatible transaction and signed using a private key associated with the user;
- recording the maintenance event on the distributed ledger, the event being assigned a unique maintenance event identifier linked to the corresponding blockchain transaction;
- updating a vehicle configuration by sending a message to an vehicle management module, the message indicating a component removal, replacement, or installation associated with the recorded maintenance event; and
- notifying an operator through an operator interface, the notification comprising a reference to the recorded maintenance event and indicating updates to the component status or vehicle configuration.

It is an objective of the invention to ensure that vehicle maintenance and configuration updates are securely traceable, cryptographically verifiable, and operationally synchronized across multiple actors, without relying on centralized authorities.

This is enabled by a novel and unique integration of decentralized authentication relying on organization-specific credentials, these credentials being verified through a smart-contract-based registry.

This is also enabled thanks to the integration of a dynamic resolution of component ownership via a distributed component registry accessed in real time, blockchain-native formatting and signing of maintenance records as immutable transactions and coordinated downstream updates to vehicle configuration and operator awareness, all through separate but interoperable smart contract modules.

Such a division of responsibilities among modules, combined with systematic interactions, provides a novel technical architecture that solves trust, traceability, and synchronization problems in regulated aerospace environments.

According to one embodiment, the maintenance data comprises a digitally signed maintenance record, and wherein prior to recording the maintenance event on the distributed ledger, the system performs an automated compliance verification on the digitally signed maintenance record using an artificial intelligence engine to extract and validate technical fields, and if an inconsistency, anomaly, or dispute is detected:
- optionally, the blockchain transaction is temporarily withheld and marked as "pending";
- the detected anomaly is logged in a compliance monitoring module and associated with a dispute identifier;
- optionally, a notification is sent via the operator interface, including a report of the anomaly;
- optionally, the disputed data is committed to the distributed ledger upon resolution and cryptographic authorization by an authorized stakeholder or supervisory authority.

This optionally enables tamper-proof evidence capture for audit trails, with verifiable time and content integrity.

According to one embodiment, the computer-implemented method further comprises the steps of:
- providing update data via the maintenance interface, said update data comprising at least one of: a maintenance status report, an estimated completion time, or a modified scope of work,
- submitting the update data to the maintenance workflow module, said update data being structured as a blockchain-compatible transaction and signed using the private key of the user, and
- recording the update data using the maintenance workflow module on the distributed ledger, the update data being associated with a reference to the maintenance event UID.

This optionally enables real-time traceability of progress and decentralized access to current status. One can also ensure trusted attestation of performed maintenance tasks, verifiable across organizational boundaries via distributed registry access

According to one embodiment, the computer-implemented method further comprises the steps of:
- providing at least one document or image file via the maintenance interface,
- generating, via an artificial intelligence engine, a structured representation of the content of the document or image file, and computing a cryptographic hash of said structured content;
- optionally, detecting an inconsistency, missing regulatory fields, or potential compliance dispute within the extracted data using the artificial intelligence engine, and if an inconsistency, missing regulatory fields, or potential compliance is detected, suspending the hash computation and subsequent blockchain anchoring, and raising a dispute flag is within a compliance monitoring module, associated with a unique anomaly identifier.
- submitting the document or image file, the generated hash and the timestamp to the maintenance workflow module, said document or image file, generated hash and timestamp being signed using the private key of the user, and
- recording at least one of the document, of the image file and of the generated hash using the maintenance workflow module on the distributed ledger as a blockchain transaction, the at least one of the document, of the image file and of the generated hash being associated with a reference to the maintenance event ID.

According to one embodiment, the computer-implemented method further comprises the steps of:
- providing completion data via the maintenance interface,
- submitting the completion data to the maintenance workflow module, said completion data being signed using the private key of the user,
- generating, using the maintenance workflow module, a maintenance certificate indicating that maintenance operations were performed, said maintenance certificate including a digital signature,
- submitting the maintenance certificate to the component registry, and
- recording the maintenance certificate using the component registry on the distributed ledger as a blockchain transaction, the maintenance certificate being associated with a reference to the component ID.

According to one embodiment, the computer-implemented method further comprises the steps of:
- submitting a message indicating the completion of maintenance work to a compliance monitoring module,
- updating a maintenance deadline using the compliance monitoring module, and scheduling a future alert based on the updated maintenance deadline.

This optionally enables proactive compliance enforcement and lifecycle tracking of mandatory inspections or replacement schedules.

In embodiments, the system further comprises a document verification module configured to automatically validate uploaded files prior to anchoring them on the distributed ledger. The module may verify file format, required metadata fields, consistency of content with declared maintenance scope, or regulatory compliance indicators.

Such verification can be performed using rule-based logic or machine learning algorithms, and may include natural language analysis of structured or semi-structured maintenance documents. Only files passing the validation step are processed for hashing, timestamping, and recording as tamper-evident transactions.

The system further acts as an interoperability bridge between existing enterprise resource planning (ERP) systems and the blockchain-based AeroChain infrastructure. It enables bidirectional data exchange through standardized APIs, allowing maintenance events, component status, and configuration changes to be synchronized without requiring any modification to the internal architecture, data models, or workflows of the ERP systems.

This bridging architecture ensures seamless integration across heterogeneous environments while preserving legacy system integrity and enabling scalable deployment.

Another aspect of the invention pertains to a transmitter device configured for submitting authenticated vehicle maintenance operations to a blockchain-based configuration management system, the transmitter device comprising:
a processor configured to:
a) receive user credentials and transmit them to an organization registry module via an application programming interface, and upon validation, store a returned authentication token;
b) acquire a component identifier via an UID or RFID or QR scanning and retrieve component data from a component registry module;
c) generate a structured maintenance transaction comprising:
   - the authenticated user's identity,
   - the component identifier,
   - operational metadata and maintenance scope,
   - and a digital signature computed using a private key of the certified maintenance organization;
d) transmit the signed transaction via the application programming interface to a maintenance workflow module, said module being deployed as a smart contract on a distributed ledger infrastructure for vehicle maintenance traceability.

In embodiments, the processor is further configured to receive and verify a digital certificate associated with the user credentials prior to generating the maintenance transaction. In embodiments, the system further enables controlled data sharing between stakeholders via smart contracts. Each data record stored on the distributed ledger is associated with an owner identity, and is by default only accessible to the owner.

Access to such records by other stakeholders is conditional upon an explicit sharing authorization, which may be granted via a smart contract mechanism. This authorization may define read-only access permissions, limited in scope and time, without enabling modification or transfer of ownership. The system thus enforces data sovereignty while allowing traceable, revocable sharing of critical information across organizational boundaries. Upon change of component ownership, any previously granted sharing permissions are automatically revoked. The system emits a request signal to the new owner, on behalf of previous data recipients, asking whether to reestablish access. This mechanism ensures dynamic, auditable data governance aligned with asset transfers.

This optionally enables secure authentication chaining and prevents unauthorized access to maintenance functionality.

According to one embodiment, the processor is further configured to generate a timestamp indicative of when the structured maintenance transaction is created, and to incorporate said timestamp into the maintenance transaction prior to computing the digital signature.

According to one embodiment, the processor is further configured to retrieve additional component metadata, including manufacturer information and prior maintenance logs, from the component registry module, and to include said metadata in the structured maintenance transaction.

Another aspect of the invention relates to a receiver device configured to process authenticated maintenance transactions and update vehicle component states in a blockchain-based configuration management system, the receiver device comprising:
a processor configured to:
   a) receive a blockchain-anchored maintenance transaction submitted by a transmitter device;
   b) verify the transaction by checking the digital signature against public keys registered in an organization registry module;
   c) based on the content of the transaction, update one or more of:
      - a component status and maintenance history in a component registry module,
      - a part-to-vehicle mapping in an vehicle management module,
      - a compliance schedule in a compliance monitoring module,
      - or an operator-facing event log in an operator interface;
wherein each update is committed through an execution step of the corresponding smart contract module deployed on the distributed ledger system.

According to one embodiment, the processor is further configured to compute a hash of the received maintenance transaction, and further to compare said hash to a blockchain-anchored reference to verify the integrity of the transaction.

This optionally enables secure validation of the transaction contents using blockchain anchoring.

According to one embodiment, the processor is further configured to update a notification log in the operator interface, said log being formatted for real-time display of the verified configuration change.

This optionally enables immediate operational awareness and reduces delays or inconsistencies in maintenance status reporting.

According to one embodiment, the processor is further configured to trigger a compliance verification routine within the compliance monitoring module in response to detecting a change in component status.

This optionally enables automatic alignment of real-world component activity with regulatory schedules, reducing the risk of oversight.

According to one embodiment, the processor is further configured to extract a timestamp, additional component metadata, and a user-associated digital certificate from the received maintenance transaction, to verify the consistency of said metadata with entries stored in the component registry module, and to authenticate the digital certificate using information from the organization registry module.

This optionally enables end-to-end traceability, historical consistency verification, and secure user authentication at the point of transaction processing.

Another aspect of the invention relates to a computer program product comprising instructions which, when executed by a processor of a transmitter device or receiver device configured within a blockchain-based vehicle configuration and maintenance orchestration system, cause the processor to perform a method comprising:
a) authenticating a user via the maintenance interface through an organization registry module;
b) identifying a vehicle component via RFID or QR scanning and retrieving its current status and ownership data from a component registry module;
c) submitting a signed maintenance transaction comprising technical metadata, maintenance scope, and authorization proof to a maintenance workflow module deployed as a smart contract on a distributed ledger infrastructure;
d) triggering an update to the vehicle configuration via an vehicle management module and issuing a notification to an operator interface; and
e) verifying blockchain transaction integrity using cryptographic signatures and organizational identity records stored in the organization registry.

### Brief Description of the Figures

Other features and advantages of the invention will become apparent from the following detailed description. To provide a clearer understanding of the invention, preferred embodiments will be described below by way of example, with particular reference to the accompanying figures, in which:
a) Figure 1 illustrates a schematic representation of a system according to the invention,
b) Figure 2 illustrates a flowchart of an authentication scheme implemented in embodiments of the disclosure,
c) Figure 3 illustrates a flowchart of a maintenance initiation scheme implemented in embodiments of the disclosure,
d) Figure 4 illustrates a flowchart of a maintenance event creation scheme implemented in embodiments of the inventive method,
e) Figure 5 illustrates a flowchart of a maintenance progress update scheme implemented in embodiments of the inventive method,
f) Figure 6 illustrates a flowchart of a shop report upload scheme implemented in embodiments of the inventive method,
g) Figure 7 illustrates a flowchart of a maintenance completion scheme implemented in embodiments of the inventive method,
h) Figure 8 illustrates a flowchart of a delivery document generation scheme implemented in embodiments of the inventive method,
i) Figure 9 illustrates a flowchart of a component return scheme implemented in embodiments of the inventive method, and
j) Figure 10 illustrates a flowchart of a component lifecycle.

The present invention is described in relation to specific embodiments and with references to figures, but the invention is not limited thereto. The figures described are merely schematic and not limitative.

### Detailed Description of Preferred Embodiments

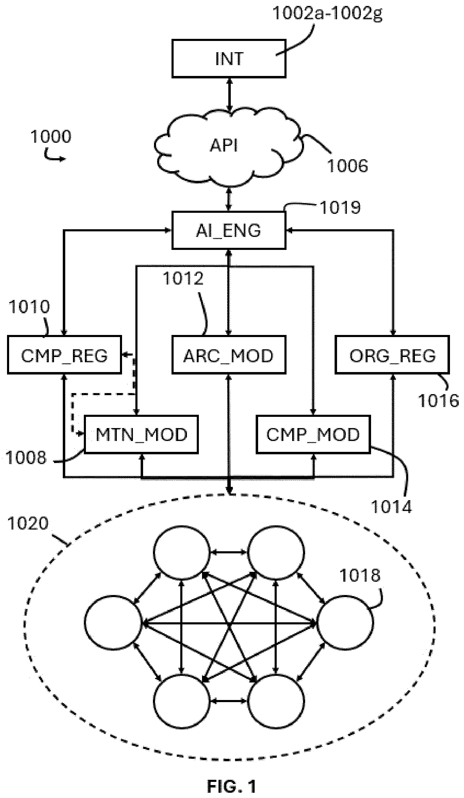

Fig. 1 shows a system 1000 for orchestrating maintenance processes of vehicle components according to the invention. The system 1000 provides a modular architecture for managing vehicle maintenance, configuration, and regulatory compliance using blockchain-based components.

The following examples describe embodiments of the system 1000 in relation to the aviation industry. However, such examples are provided solely for purposes of illustration, and the scope of the present invention is not limited to aviation applications. The system 1000 may likewise be implemented for managing maintenance, configuration, operational status, and regulatory compliance of other types of vehicles, including but not limited to maritime vessels, railway vehicles, road vehicles, and spacecraft, as well as any other machinery or equipment requiring comparable oversight.

The system 1000 comprises a plurality of interacting elements communicating via an Application Programming Interface (API) 1006. In particular, the system 1000 integrates a decentralized ledger 1020 with smart contract-based modules 1008-1016, thereby enabling secure, traceable, and interoperable operations across various stakeholders in the aviation maintenance ecosystem.

The system 1000 comprises a set of specialized user interfaces 1002a-1002g tailored to different stakeholder categories, ensuring role-based access, operational segregation, and data privacy. These interfaces 1002a-1002g are designed to run on user terminals such as workstations, tablets, or portable devices, and interact with the backend modules via the API 1006.

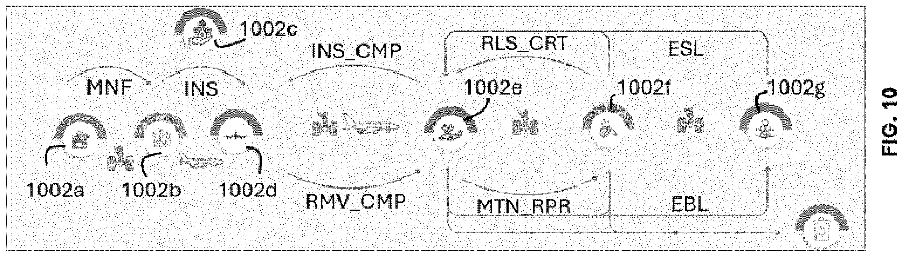

Each interface 1002a-1002g allows users to view or execute only those operations for which they are authenticated, and only on assets or data they are authorized to access. These interfaces 1002a-1002g are represented on figure 10, which shows a flowchart of a component lifecycle, and may include:
a) An Original Equipment Manufacturer (OEM) component interface 1002a, which allows manufacturers of individual components to access operational usage data, certified maintenance history, and anonymized performance feedback, when shared by the current owner via smart contract permissions.
b) An OEM vehicle interface 1002b, which enables vehicle manufacturers to track vehicle-level configurations, lifecycle metrics, and historical installation events, supporting predictive analytics and continuous airworthiness improvements.
c) An owner interface 1002c, which provides vehicle or component owners with complete visibility into asset history, status, ownership chain, and compliance deadlines. Owners may also define data sharing policies and authorize or revoke access to third parties.
d) An operator interface 1002d, which enables fleet operators to monitor in real time the status of their vehicle, the configuration of installed components, and upcoming regulatory events. Operators can also receive automatic alerts, maintenance certificates, and compliance updates.
e) A maintenance interface 1002e, used by organizations performing vehicle-level maintenance to initiate work orders, upload task reports, record component removal and reinstallation, and interact with regulatory workflows.
f) A maintenance component interface 1002f, designed for workshops and certified component-level repair stations to issue Form 1 or equivalent certificates, attach shop reports, and update component lifecycle entries upon completion of work.
g) A marketplace interface 1002g, which facilitates the publication and consultation of available components, enabling traceable transactions based on verified lifecycle history. Listings and visibility are governed by the owner's sharing policies and smart contract rules.

All interfaces 1002a-1002g are secured by identity and role validation through an organization registry 1016, and all data exchanges are logged through smart contract interactions recorded on the distributed ledger. This modular interface architecture supports secure collaboration between independent stakeholders while preserving data integrity, confidentiality, and operational independence.

Each interface 1002a-1002g of the system 1000 supports specific operational use cases, ensuring traceable, compliant, and tamper-resistant execution of vehicle and component maintenance workflows. These interfaces 1002a-1002g are role-specific and aligned with the permission logic defined in the organization registry 1016. Examples of such permission logic include:
a) The component interface 1002a allows manufacturers to receive authorized feedback on component usage, failure rates, and performance anomalies based on operational data shared by asset owners. This supports root cause analysis, design optimization, and warranty tracking.
b) The OEM Vehicle interface 1002b enables vehicle manufacturers to monitor fleet-level configuration and lifecycle data, identify recurring configuration issues, and anticipate design improvements or service bulletins based on anonymized field data.
c) The owner interface 1002c used by lessors, asset managers, or operators with full ownership enables to monitor asset lifecycle, validate maintenance histories before resale or return, manage regulatory certificates, and control sharing permissions for external parties.
d) The operator interface 1002d allows airlines and fleet managers to receive real-time alerts on maintenance events, verify compliance documentation before flight release, manage fleet configuration consistency, and coordinate planning with maintenance organizations.
e) The maintenance interface 1002e enables base maintenance teams to create, update, and certify vehicle-level tasks such as heavy checks, vehicle reconfiguration, or system inspections. Supports generation of delivery documents and compliance reporting.
f) The maintenance component interface 1002f supports independent or in-house workshops in issuing Form 1 certificates, uploading shop findings, linking component reports to vehicle events, and validating compliance through anchored documentation.
g) The marketplace interface 1002g allows stakeholders to list or acquire certified components based on verified blockchain records. Enables detection of unused (dormant) components, secure ownership transfer, and lifecycle analysis prior to transaction.

All interfaces interact through the system's API 1006 and smart contract infrastructure. Each transaction or document generated through these interfaces may be recorded on the distributed ledger, ensuring full traceability and auditability across the entire maintenance ecosystem.

These interfaces communicate via the API 1006 with a set of interconnected modules 1008-1016, each responsible for a distinct function in the vehicle maintenance and configuration management lifecycle. These modules include a maintenance workflow module 1008, a component registry 1010, an vehicle management module 1012, a compliance monitoring module 1014, and an organization registry 1016.

In the context of the present invention, a module refers to a functionally specialized component of the system, responsible for executing a specific subset of operations. Modules encapsulate the logic of their respective subset of operations, and interact with one another to coordinate workflows, share data, and maintain a consistent system state across distributed nodes.

Each of these modules may be implemented as a smart contract. A smart contract is an agreement between parties that is written in the form of a computer program. Such "self-executing" programs can be stored on a blockchain and programmed to run automatically when certain conditions are met. Smart contracts encode business logic and execute automatically when predefined conditions are met, without requiring centralized control. Their state is maintained across a distributed network 1020 and updated through consensus mechanisms, ensuring resilience, integrity, and transparency. The use of smart contracts in this system 1000 enables secure automation of complex workflows, auditability of historical actions, and trustless collaboration between independent entities such as maintenance organizations, airlines, and regulatory bodies.

The distributed network 1020 may be a distributed ledger 1020 consisting of multiple interconnected computing entities referred to as nodes 1018, each of which maintains a synchronized copy of the ledger's data. Updates are validated collectively by the nodes 1018 before being added to the distributed ledger 1020, thereby preventing tampering of data.

The maintenance workflow module 1008 is responsible for the orchestration of the maintenance process. In particular, the maintenance workflow module 1008 may be responsible for validating maintenance authorizations, verifying that maintenance tasks are performed in accordance with approved procedures, and monitoring the successful completion of those tasks. Upon verification, the maintenance workflow module 1008 may automatically generate essential documentation such as Form 1 certificates and Dirty Fingerprint (DFP) documents. This documentation may be recorded on the blockchain, ensuring that every maintenance action is traceable, tamper-resistant, and linked to the corresponding vehicle configuration data. This documentation may be stored entirely on-chain. Alternatively, only its cryptographic hash and metadata may be recorded on-chain while the full document is stored off-chain in a secure, verifiable storage system to optimize scalability and data retrieval.

The component registry 1010 is responsible for the authoritative state and history of all vehicle components in the system 1000. The component registry 1010 may record the current status and ownership of each component, track operational usage metrics such as flight hours and cycles, and store detailed maintenance histories.

Document attachments such as inspection results, and repair reports may be associated with individual components. This module ensures that each component's full lifecycle is documented and accessible across organizational boundaries, supporting secure component transfers and accurate maintenance planning.

The vehicle management module 1012 is responsible for tracking the physical configuration of vehicle. The vehicle management module 1012 may log all component installation and removal events, linking each component to its respective vehicle and operational context. By maintaining a synchronized view of vehicle configuration, this module guarantees that maintenance actions and configuration changes are accurately reflected across the system 1000. The vehicle management module 1012 ensures the consistency and completeness of configuration data, especially when components are moved between vehicle or transferred between operators.

The compliance monitoring module 1014 is responsible for regulatory oversight and automatic maintenance scheduling. Based on usage data and manufacturer-defined maintenance intervals, the compliance monitoring module 1014 may automatically schedule upcoming maintenance tasks and generate alerts as deadlines approach. The compliance monitoring module 1014 may maintain a record of compliance actions and requirements, enabling both operators and regulators to verify adherence to applicable airworthiness standards. These records of compliance actions and requirements may be committed as time-stamped ledger entries The compliance monitoring module 1014 enhances operational safety and reduces the risk of non-compliance by embedding regulatory logic directly into the maintenance workflow.

The organization registry 1016 is responsible for authentication and access control throughout the system 1000. The organization registry 1016 verifies the identity and role of users based on credentials submitted through the maintenance or operator interfaces.

The organization registry may have access to a table, e.g. in a relation database, with one or more fields selected from : a unique user id, an organization name, a user type (e.g. company, maintenance user, OEM user, broker, marketplace user, etc.), and/or a public blockchain key used for authentication and ownership tracking. These fields may together form a so called user data

The component registry 1010 may have access to a table, e.g. in a relation database, with one or more fields selected from : a unique blockchain identifier, a part number, a serial number, a component type, a reference to a user (from the organization registry 1016), a component status (e.g. active, in stock, scrapped, installed, etc.), airworthiness data (time since new and/or cycles since new), references to related documents (e.g. a list of corresponding hashes), and/or a vehicle id. These fields may together form a so called component data.

The maintenance workflow module 1008 may have access to a table, e.g. in a relation database, with one or more fields selected from : an unique event id, a reference to a component (from the component registry 1010), an event type (e.g. form 1, installation, removal, repair, scrap), an event date, a reference to a user (from the organization registry 1016), and/or references to related documents (e.g. a list of corresponding hashes). These fields may together form a so called maintenance data.

Upon successful validation, the organization registry 1016 may issue cryptographically secure tokens, such as a JSON Web Token (JWT) that define the user's permissions and organizational affiliation. This module ensures that only authorized users are permitted to execute sensitive operations or access protected data, forming the security backbone of the entire architecture.

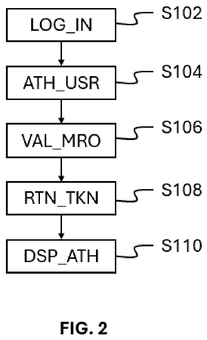

Fig. 2 shows a flowchart of an authentication scheme which may be implemented by the inventive method. The authentication scheme is employed to control access to the maintenance interface 1002 and to regulate interactions with the system 1000. This scheme ensures that only authorized personnel affiliated with recognized organizations can access or modify vehicle configuration or maintenance data, thereby enhancing both operational integrity and regulatory compliance. Each authentication event is recorded as a blockchain transaction or linked to one via a signed token, enabling full cryptographic traceability of all subsequent state transitions initiated by the user.

The authentication process begins when a user enters S102 identification credentials via the maintenance interface 1002.

These credentials are sent S104 from the maintenance interface 1002 to the organization registry 1016, via the API 1006. The organization registry 1016 functions as a decentralized access control layer, i.e. a distributed permission management system where access rights and identity data are stored and enforced through consensus mechanisms, thereby eliminating reliance on a single centralized authority and ensuring transparency, resilience, and tamper resistance. The organization registry 1016 may store verifiable information about recognized organizations, including associated user roles, cryptographic keys, and permissions.

Upon receipt of the credentials, the organization registry 1016 performs a validation process S106. This includes verifying that the organization is recognized within the system 1000, that the user credentials match registered data, and that the user possesses the necessary permissions to access or execute the intended operations within the maintenance system 1000. As previously mentioned, the organization registry 1016 may be implemented as a decentralized smart contract module rather than a centralized authentication server. The validation logic and permission data are thus stored and executed across a distributed network, where updates and verification are subject to consensus rules. As a result, no single party can alter access permissions unilaterally, and all authentication actions are verifiable, tamper-resistant, and transparently logged, enhancing trust and auditability, which is particularly relevant in multi-party environments.

If the validation is successful, the organization registry 1016 returns an authentication token to the maintenance interface 1002 through the API 1006. This token may take the form of a digitally signed JSON Web Token (JWT), a blockchain-based capability token, or another cryptographically secure artifact. The token includes metadata describing the authenticated user's permissions, roles, and time-bound validity. The maintenance interface 1002 may thus cache the authentication state and enforce granular access control during subsequent operations. JWT allows fast, stateless validation by embedding user identity, roles, and permissions directly within the signed token, enabling low-latency authorization without requiring a call to the issuing authority. A blockchain-based capability token provides on-chain verifiability and immutable auditability of access rights, supporting decentralized permission management across multiple parties. Other cryptographically secure artifacts, such as encrypted session tokens or delegated credentials, offer adaptable security models for specific operational environments, including constrained systems or enhanced authentication scenarios.

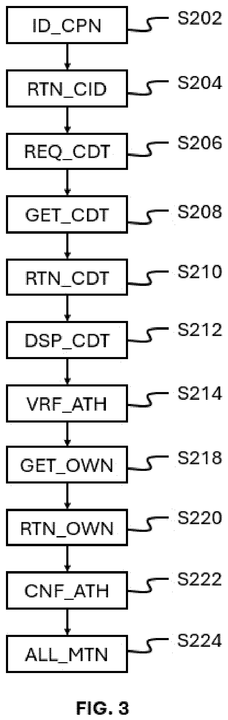

Fig. 3 shows a flowchart of a maintenance initiation scheme which may be implemented by the inventive method. The maintenance initiation scheme ensures that only authorized personnel may perform maintenance actions on specific vehicle components. This scheme is designed to enforce traceable, role-based access control at the component level, and to verify ownership before any modification or maintenance event is recorded on the blockchain. It operates in conjunction with the broader authentication framework and is executed through interaction with the decentralized modules of the system 1000.

In the first step of the maintenance initiation scheme, the vehicle component is identified by the technician using the maintenance interface 1002. This interface may be connected to a scanner to retrieve a unique identifier embedded in a tag applied to the physical component. The tag may take the form of a QR code or an RFID chip, both of which encode a component ID. Upon scanning S202, the maintenance interface 1002 prepares S204 a request to retrieve information associated with the component ID.

The maintenance interface 1002 then sends S206 the component ID to the component registry 1010 via the API 1006 to request its associated data. Upon receiving this request, the component registry 1010 retrieves S208 the record corresponding to the component ID within the blockchain ledger.

The component registry 1010 then returns S210 the associated component information to the maintenance interface 1002 through the same API 1006. This data package includes key metadata such as the component's status, usage metrics (e.g., flight hours and cycles), and current ownership.

The component data retrieved and returned by the component registry 1010 is stored on the distributed ledger, ensuring that all records such as status, usage metrics, and ownership are tamper-resistant, and cryptographically verifiable. This decentralized storage model eliminates reliance on a single data authority, and enhances data integrity and availability, thereby enabling more trustworthy maintenance decision-making, especially in multi-party environments.

The maintenance interface 1002 processes this information and displays S212 it to the technician, enabling informed decision-making regarding potential interventions or inspections.

Before a new maintenance event can be created or authorized, the system 1000 may verify whether the authenticated user has the right to perform work on the identified component. To do this, the maintenance interface 1002 sends S214 an authorization verification request through the API 1006 to the maintenance workflow module 1008. This request may include the component ID and the authenticated user's address, such as a physical address, a blockchain address, an IP address, etc.

The maintenance workflow module 1008 responds by retrieving the current owner address of the component from the component registry 1010. The maintenance workflow module 1008 thus sends S218 the component ID to the component registry 1010, which then returns S220 the current owner address. The maintenance workflow module 1008 may then compare the component's registered owner with the authenticated user's affiliated organization. If the component's registered owner and the authenticated user's affiliated organization are identical, the authorization is confirmed S222, and the system 1000 allows S224 the creation of a maintenance event. Otherwise, the request is denied. This step ensures that only authorized parties, certified under a valid organization, are permitted to perform or certify work on the component, thus preserving operational integrity and compliance.

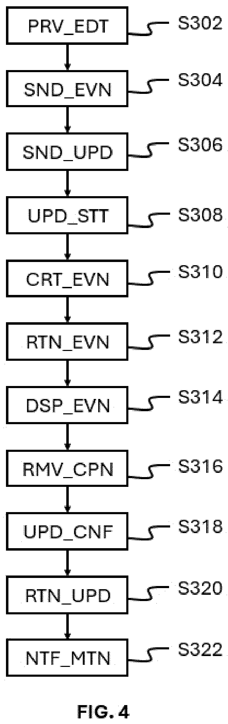

Fig. 4 shows a flowchart of a maintenance event creation scheme, which may be implemented to securely document and track maintenance operations on vehicle components, while ensuring real-time synchronization across all relevant modules and interfaces. This scheme enables the structured capture of maintenance data, immutable event recording on the blockchain, and automated updates to vehicle configuration and operator notifications.

The process begins with the technician providing maintenance data S302 via the maintenance interface 1002. This data may include the type of maintenance operation performed (e.g. inspection, maintenance, replacement, overhaul), the component involved, the estimated duration of the maintenance, and a description of the maintenance operation. The maintenance interface 1002 encodes the data into a schema-compliant structure suitable for execution by the maintenance workflow smart contract, such as a JSON object, a schema-enforced data object, or a smart contract method input.

The maintenance data is then structured as a blockchain-compatible transaction, signed using the private key of the user, and submitted S304 from the maintenance interface 1002 to the maintenance workflow module 1008 through the API 1006. Upon receiving the data, the maintenance workflow module 1008 may send S306 a status update message to the component registry 1010, which includes updated information such as the component's ID and its new status. Upon receiving the message, the component registry 1010 updates S308 the status of the relevant vehicle component, accordingly, ensuring that the configuration data remains current and accurate.

The maintenance workflow module 1008 then creates S310 a new maintenance event on its blockchain ledger and generates a unique maintenance event identifier. This identifier serves as a permanent reference to the blockchain transaction that logs the maintenance activity. The identifier is returned S312 to the maintenance interface 1002 via the API 1006 and displayed S314 to the user, allowing the user to track, reference, or audit the maintenance operation in the future.

The system 1000 then updates a corresponding vehicle configuration to reflect the changes resulting from the maintenance activity and ensure that data on the component registry 1010 and vehicle management module 1012 remain synchronized. To perform this update, a message is sent S316 from the API 1006 to the vehicle management module 1012. This message may contain the vehicle ID, the component ID, and the new status of the component.

Upon successful reception of this message, the vehicle management module 1012 updates S318 the vehicle configuration on its distributed ledger to reflect the component's removal. This update allows to maintain a synchronized record of the vehicle's configuration across all modules in the system 1000. The result of this operation may then be sent back S320 to the maintenance workflow module 1008, e.g. for logging purposes.

Once the vehicle configuration has been successfully updated in the Vehicle management module 1012, a notification is sent S322 to the operator to inform them of the change. This notification is generated by the API 1006 and transmitted to the operator interface 1004. The message may include the identity of the component removed, the vehicle from which it was removed, a timestamp, and other relevant maintenance data. By delivering this information to the operator in real time, the system 1000 ensures that fleet managers, airline maintenance coordinators, and other stakeholder maintain up-to-date visibility into the status of their vehicle and component inventory.

In some embodiments, the system 1000 comprises an artificial intelligence engine 1019 configured to process maintenance-related documents, shop reports, or image files submitted by authorized users.

The artificial intelligence engine 1019 may apply one or more machine learning models, such as natural language processing (NLP) models, computer vision models, or hybrid multimodal architectures, to automatically extract relevant information from the submitted file.

The extracted information may include structured data elements such as component identifiers, operational metrics, maintenance actions performed, regulatory references, technician identifiers, and date and time stamps. Based on the extracted information, the artificial intelligence engine 1019 generates a structured representation of the document or image content that conforms to a predefined schema for subsequent processing within the system 1000.

Once the structured representation has been generated, the artificial intelligence engine 1019 may compute a cryptographic hash of the structured content. This hash uniquely identifies the processed data and may be used for blockchain anchoring to provide an immutable proof of the document's or image file's integrity and authenticity.

The computation of the hash may employ secure hashing algorithms, such as SHA-256, SHA-3, or equivalent cryptographic functions, ensuring that any subsequent alteration of the structured content results in a different hash value, thereby enabling tamper detection.

In certain embodiments, the artificial intelligence engine 1019 is further configured to perform automated compliance verification prior to initiating the hash computation.

his verification may involve detecting inconsistencies in the extracted data, identifying missing regulatory fields required for airworthiness or safety documentation, or flagging potential compliance disputes based on domain-specific rules encoded in the model or retrieved from the compliance monitoring module 1014.

If any such anomaly is detected, the artificial intelligence engine 1019 may suspend the hash computation and the subsequent blockchain anchoring process. In this case, the engine raises a dispute flag within the compliance monitoring module 1014 and associates the anomaly with a unique anomaly identifier.

The anomaly identifier may be stored in the distributed ledger together with relevant contextual metadata, enabling traceability, auditability, and timely resolution of compliance-related issues.

The artificial intelligence engine 1019 may be integrated within the maintenance interface 1002, thereby providing an automated, intelligent preprocessing stage that ensures only complete, verified, and compliant data is anchored to the blockchain.

This approach improves data integrity, reduces the risk of incomplete or non-compliant documentation being permanently recorded, and facilitates early detection and resolution of potential disputes between stakeholders such as maintenance organizations, operators, and regulators.

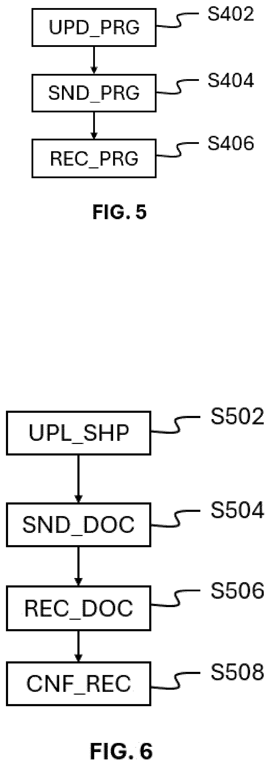

Fig. 5 shows a flowchart of a maintenance progress update scheme. This maintenance progress update scheme may implemented to ensure that maintenance activities are monitored and accurately recorded throughout their execution. This scheme allows authorized technicians to periodically report the current status of ongoing maintenance events, thereby enhancing operational visibility, auditability, and coordination among stakeholders such as airline operators and regulators.

The process begins with the technician or authorized personnel providing S402 update data via the maintenance interface 1002. This update data may include at least one of: a maintenance status report, an estimated completion time, or a modified scope of work. Once the update data is prepared, it is structured as a blockchain-compatible transaction and signed using the private key of the user, and sent S404 from the maintenance interface 1002 to the maintenance workflow module 1008 via the API 1006. Upon receipt, the maintenance workflow module 1008 records S406 the update on its distributed ledger 1020.

This progress update scheme may be executed periodically, preferably on a daily basis, to maintain an accurate and up-to-date record of all maintenance operations. Regular updates ensure that deviation from expected timelines can be detected early, and relevant stakeholders remain informed in real time.

Fig. 6 shows a flowchart of a shop report upload scheme. This shop report upload scheme may be implemented to allow technicians and maintenance organizations to securely document the outcomes of maintenance operations. Shop reports may be accompanied by photographic evidence, and serve as records for demonstrating task completion, verifying compliance with maintenance procedures, and supporting traceability for regulatory or operational audits.

The scheme begins with the technician or authorized personnel uploading S502 a shop report, which may include at least one document or image file. Supporting image files may visually document the condition of the component before and after service. This information is submitted through the maintenance interface 1002, to e.g. structure the report for transmission.

Once the report and associated files are prepared, the maintenance interface 1002 may generate a hash of the document content and appends a timestamp indicating when the report was submitted. The document itself is then sent S504 with its hash and timestamp to the maintenance workflow module 1008 via the API 1006. The maintenance workflow module 1008 records the document S506 with its hash and timestamp on the blockchain, creating an entry in the ledger that serves as proof of the document's content and submission time.

After the report is successfully recorded, the maintenance workflow module 1008 issues a confirmation message S508 back to the maintenance interface 1002 via the API 1006, thereby allowing the technician to verify that the report has been securely archived.

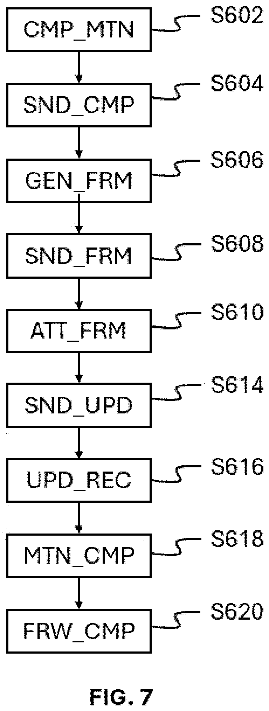

Fig. 7 shows a maintenance completion scheme. This maintenance completion scheme may be implemented to formally conclude a maintenance event and update all relevant system 1000 records in a secure, traceable, and verifiable manner. This scheme ensures that maintenance completion is properly certified, associated with the corresponding vehicle component, and reflected in both operational and compliance-related data across the blockchain-based architecture.

The technician first inputs completion data S602 via the maintenance interface 1002, which then sends S604 a message indicating the completion of maintenance work to the maintenance workflow module 1008 through the API 1006. This message may include the maintenance event id and a completion data payload.

Upon receiving the completion message, the maintenance workflow module 1008 generates a maintenance certificate S606, or Form 1 certificate. This certificate confirms that maintenance operations have been completed in accordance with applicable procedures and organizational authorizations. It includes essential metadata such as the maintenance performed, the component condition, a technician certification, and a digital signature. Once generated, the certificate is signed and anchored to the distributed ledger to serve as an immutable, blockchain record that proves the successful and compliant execution of maintenance work.

The maintenance certificate is then sent S608 from the maintenance workflow module 1008 to the component registry 1010, which attaches the maintenance certificate S610 to the corresponding vehicle component. This step ensures that future queries into the component's history will include a reference to the certificate and its associated maintenance data.

Subsequently, the maintenance workflow module 1008 may send a message S614 comprising updated status data related to the component to the component registry 1010. This message may include the operational status of the component (e.g. "active"), updated flight hours, updated cycles and a reference to the maintenance event. Upon reception of the message, the component registry 1010 records S616 the update on its distributed ledger.

After successfully updating the component record, the component registry 1010 sends S618 a confirmation message back to the maintenance workflow module 1008, which then forwards S620 it through the API 1006 to the maintenance interface 1002. This message serves as an acknowledgment that the completion data has been processed, the component status has been updated, and the maintenance certificate has been recorded and linked.

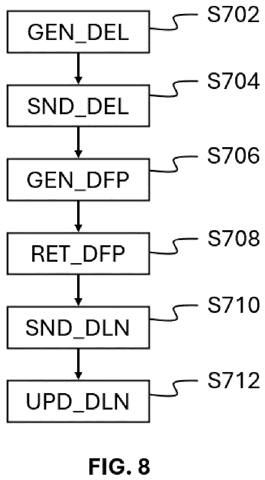

Fig. 8 shows a flowchart of a delivery document generation scheme. This delivery document generation scheme may be implemented to produce official documentation that confirms the completion of a maintenance event and authorizes the return of the vehicle component or vehicle to operational service. This scheme ensures that all required regulatory and technical information is compiled into a standardized, tamper-evident document that is traceable to the corresponding maintenance event and stored in a verifiable format.

The scheme is initiated when a technician, upon completing all necessary maintenance operations, uses the maintenance interface 1002 to request the generation of final delivery documents S702. The maintenance interface 1002 then sends a message S704 to the maintenance workflow module 1008 via the API 1006. This message may contain the maintenance event ID.

Upon receipt of the request, the maintenance workflow module 1008 generates S706 the delivery document. This document may be structured according to predefined templates and populated with verified data drawn from the blockchain records associated with the maintenance event. Once generated, the document is hashed to produce a unique digital identifier. The document and its corresponding hash are then returned S708 from the maintenance workflow module 1008 to the maintenance interface 1002 through the API 1006. The hash serves as a permanent reference that can later be used to verify the authenticity and integrity of the document.

In parallel to the generation of this delivery document, the API 1006 sends a message S710 indicating the completion of maintenance work to the compliance monitoring module 1014. This message signals that a scheduled maintenance task has been completed and that future compliance deadlines must be updated. This message may comprise the component id and a due date for the next maintenance operation. The compliance monitoring module 1014 processes this event and performs an update S712 to the associated maintenance deadline.

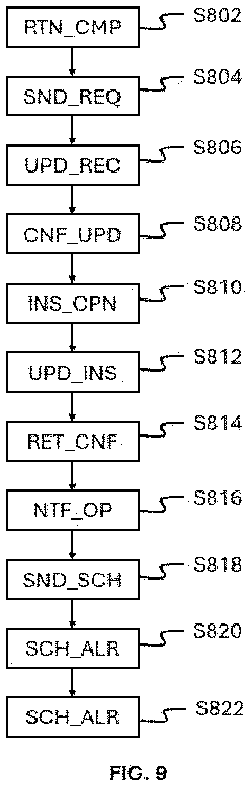

Fig. 9 shows a flowchart of a component return scheme. This component return scheme may be implemented to formalize the transfer of a maintained component back to the operator and to update all relevant system 1000 records. This scheme ensures that the ownership of the component is securely reassigned, its installation on the vehicle is correctly logged, and compliance schedules are adjusted accordingly. The component return scheme may be executed after the completion of maintenance and delivery documentation.

The scheme is initiated when the technician uses the maintenance interface 1002 to select the option to return the part to the operator. A request is sent S804 to the component registry 1010 via the API 1006. This request may include the address of the technician or the maintenance organization returning the component, the address of the receiving operator, and the component identifier. The component registry 1010 then updates its records S806 and transfers ownership of the component on its ledger. Once the transfer is successfully completed, a confirmation is sent back S808 from the component registry 1010 to the API 1006.

Following confirmation of the ownership transfer, the system 1000 sends a message S810 from the API 1006 to the vehicle management module 1012 to record the reinstallation of the component on a specific vehicle. Before logging reinstallation, the vehicle management module 1012 may verify that the requesting organization matches the registered component owner in the component registry 1010, ensuring authorized redeployment. This message includes the vehicle identifier, the component identifier, the component position on the vehicle, and the component's status (e.g., "post maintenance"). The vehicle management module 1012 updates S812 the vehicle configuration accordingly, associating the component with the vehicle. After successful processing, the module returns S814 a confirmation message, which may be displayed on the maintenance interface 1002 to inform the technician that the component has been properly reinstalled.

After the component has been successfully returned and installed, the operator is notified that maintenance has been completed. A notification is sent S816 via the API 1006 to the operator interface 1004, allowing authorized personnel to view updated configuration data and component status. This notification ensures transparency between the maintenance organization and the operator and provides immediate operational visibility.

Finally, to maintain ongoing regulatory compliance, a message is sent S818 from the API 1006 to the compliance monitoring module 1014 to schedule the next maintenance alert for the reinstalled component. This message includes the component identifier and the appropriate maintenance interval, e.g. based on regulatory or manufacturer-defined guidelines. The compliance monitoring module 1014 calculates S820 the next due date for maintenance and returns S822 a scheduled alert to the API 1006, which is stored and made accessible to both operators and maintenance planners. This ensures the component remains within its compliance lifecycle following its return to service.

The system 1000 and method described above enables a secure, decentralized, and verifiable approach to vehicle maintenance and configuration management. By leveraging blockchain technology and smart contract-based modules, the system 1000 creates an immutable audit trail, where every maintenance action, ownership change, or compliance update is recorded with cryptographic proof. This guarantees a tamper-evident maintenance history that is essential for meeting regulatory requirements and conducting thorough safety investigations.

In addition, the system 1000 enforces multi-party verification by requiring cryptographic signatures from authorized maintenance personnel. This ensures that only certified and properly authenticated technicians can execute and certify maintenance activities, thereby preserving the integrity and accountability of the process.

The architecture also supports real-time transparency across all involved stakeholders. Operators, regulators, and OEMs can access up-to-date maintenance and configuration data through their respective interfaces, gaining immediate insight into vehicle status and component history without exposing sensitive commercial information. This combination of traceability, authentication, and selective visibility enhances safety, improves collaboration, and promotes trust throughout the aviation maintenance ecosystem.

## Claims

1. A computer-implemented method (S100-S800) for managing vehicle components and maintenance events via a blockchain-based infrastructure, the method being executed by a plurality of smart contract modules deployed on a distributed ledger system, the method comprising the steps of:
• authenticating (S102) a user via a dedicated interface (100x), comprising:
- transmitting user credentials to an organization registry module (1016) via an application programming interface (1006),
- verifying organizational affiliation and role of the user, and
- receiving an authentication token;
• identifying (S202) a vehicle component by acquiring a component identifier using an UID, RFID or QR code applied to a tag on the component;
• retrieving (S206, S208) component information from a component registry module (1010), the component information comprising at least an operational status and a current ownership identifier;
• verifying (S220, S222), based on the authentication token, whether the authenticated user is authorized to initiate maintenance on the component, by comparing a unique organization ID associated with the user against ownership data stored in the component registry (1010);
• submitting (S304) maintenance data, to a maintenance workflow module (1008), the maintenance data being structured as a blockchain-compatible transaction and signed using a private key associated with the user;
• recording (S310) the maintenance event on the distributed ledger, the event being assigned a unique maintenance event identifier linked to the corresponding blockchain transaction;
• updating (S316, S318) a vehicle configuration by sending a message to an vehicle management module (1012), the message indicating a component removal, replacement, or installation associated with the recorded maintenance event; and
• notifying (S322) an operator through an operator interface (1004), the notification comprising a reference to the recorded maintenance event and indicating updates to the component status or vehicle configuration.

2. The computer-implemented method according to claim 1, wherein the maintenance data comprises a digitally signed maintenance record, and wherein prior to recording the maintenance event on the distributed ledger, the system performs an automated compliance verification on the digitally signed maintenance record using an artificial intelligence engine (1019) to extract and validate technical fields, and if an inconsistency, anomaly, or dispute is detected:
• optionally, the blockchain transaction is temporarily withheld and marked as "pending";
• the detected anomaly is logged in a compliance monitoring module (1014) and associated with a dispute identifier;
• optionally, a notification is sent via the operator interface (1002d), including a report of the anomaly;
• optionally, the disputed data is committed to the distributed ledger upon resolution and cryptographic authorization by an authorized stakeholder or supervisory authority.

3. The computer-implemented method according to any of the preceding claims, further comprising the steps of:
• providing (S402) update data via the maintenance interface (1002), said update data comprising at least one of: a maintenance status report, an estimated completion time, or a modified scope of work,
• submitting (S404) the update data to the maintenance workflow module (1008), said update data being structured as a blockchain-compatible transaction and signed using the private key of the user, and
• recording (S406) the update data using the maintenance workflow module (1008) on the distributed ledger, the update data being associated with a reference to the maintenance event UID.

4. The computer-implemented method according to any of the preceding claims, further comprising the steps of:
• providing (S502) at least one document or image file via the maintenance interface (1002),
• generating, via an artificial intelligence engine (1019), a structured representation of the content of the document or image file, and computing a cryptographic hash of said structured content;
• optionally, detecting an inconsistency, missing regulatory fields, or potential compliance dispute within the extracted data using the artificial intelligence engine (1019), and if an inconsistency, missing regulatory fields, or potential compliance is detected, suspending the hash computation and subsequent blockchain anchoring, and raising a dispute flag is within a compliance monitoring module (1014), associated with a unique anomaly identifier.
• submitting (S504) the document or image file, the generated hash and the timestamp to the maintenance workflow module (1008), said document or image file, generated hash and timestamp being signed using the private key of the user, and
• recording (S506) at least one of the document, of the image file and of the generated hash using the maintenance workflow module (1008) on the distributed ledger as a blockchain transaction, the at least one of the document, of the image file and of the generated hash being associated with a reference to the maintenance event ID.

5. The computer-implemented method according to any of the preceding claims, further comprising the steps of:
• providing (S602) completion data via the maintenance interface (100X),
• submitting (S604) the completion data to the maintenance workflow module (1008), said completion data being signed using the private key of the user,
• generating (S606), using the maintenance workflow module (1008), a maintenance certificate indicating that maintenance operations were performed, said maintenance certificate including a digital signature,
• submitting (S608) the maintenance certificate to the component registry (1010), and
• recording (S610) the maintenance certificate using the component registry (1010) on the distributed ledger as a blockchain transaction, the maintenance certificate being associated with a reference to the component ID.

6. The computer-implemented method according to the previous claim, further comprising the steps of:
• submitting (S710) a message indicating the completion of maintenance work to a compliance monitoring module (1014),
• updating a maintenance deadline using the compliance monitoring module (1014), and scheduling a future alert based on the updated maintenance deadline.

7. A transmitter device (100X) configured for submitting authenticated vehicle maintenance operations to a blockchain-based configuration management system, the transmitter device (100X) comprising:
a processor configured to:
a) receive user credentials and transmit them to an organization registry module (1016) via an application programming interface (1006), and upon validation, store a returned authentication token;
b) acquire (S202) a component identifier via an UID or RFID or QR scanning and retrieve (S206) component data from a component registry module (1010);
c) generate a structured maintenance transaction comprising:
- the authenticated user's identity,
- the component identifier,
- operational metadata and maintenance scope,
- and a digital signature computed using a private key of the certified maintenance organization;
d) transmit (S304) the signed transaction via the application programming interface (1006) to a maintenance workflow module (1008), said module being deployed as a smart contract on a distributed ledger infrastructure for vehicle maintenance traceability.

8. The transmitter device according to claim 7, wherein the processor is further configured to generate a timestamp indicative of when the structured maintenance transaction is created, and to incorporate said timestamp into the maintenance transaction prior to computing the digital signature.

9. The transmitter device according to any of claims 7 or 8, wherein the processor is further configured to retrieve additional component metadata, including manufacturer information and prior maintenance logs, from the component registry module (1010), and to include said metadata in the structured maintenance transaction.

10. The transmitter device according to any of claims 7 to 9, wherein the processor is further configured to receive and verify a digital certificate associated with the user credentials prior to generating the maintenance transaction.

11. A receiver device (1010, 1012, 1014, or 1004) configured to process authenticated maintenance transactions and update vehicle component states in a blockchain-based configuration management system, the receiver device comprising:
a processor configured to:
e) receive a blockchain-anchored maintenance transaction submitted by a transmitter device (100x);
f) verify the transaction by checking the digital signature against public keys registered in an organization registry module (1016);
g) based on the content of the transaction, update one or more of:
- a component status and maintenance history in a component registry module (1010),
- a part-to-vehicle mapping in an vehicle management module (1012),
- a compliance schedule in a compliance monitoring module (1014),
- or an operator-facing event log in an operator interface (1004);
wherein each update is committed through an execution step of the corresponding smart contract module deployed on the distributed ledger system.

12. The receiver device according to claim 11, wherein the processor is further configured to compute a hash of the received maintenance transaction, and further to compare said hash to a blockchain-anchored reference to verify the integrity of the transaction.

13. The receiver device according to claim 11 or 12, wherein the processor is further configured to update a notification log in the operator interface (1004), said log being formatted for real-time display of the verified configuration change.

14. The receiver device according to any of claims 11 to 13, wherein the processor is further configured to trigger a compliance verification routine within the compliance monitoring module (1014) in response to detecting a change in component status.

15. The receiver device according to any of claims 11 to 14, wherein the processor is further configured to extract a timestamp, additional component metadata, and a user-associated digital certificate from the received maintenance transaction, to verify the consistency of said metadata with entries stored in the component registry module (1010), and to authenticate the digital certificate using information from the organization registry module (1016).

16. A computer program product comprising instructions which, when executed by a processor of a transmitter device (1002) or receiver device (1004, 1010, 1012, or 1014) configured within a blockchain-based vehicle configuration and maintenance orchestration system, cause the processor to perform a method comprising:
h) authenticating a user via the maintenance interface (1002) through an organization registry module (1016);
i) identifying a vehicle component via **RFID** or QR scanning and retrieving its current status and ownership data from a component registry module (1010);
j) submitting a signed maintenance transaction comprising technical metadata, maintenance scope, and authorization proof to a maintenance workflow module (1008) deployed as a smart contract on a distributed ledger infrastructure;
k) triggering an update to the vehicle configuration via an vehicle management module (1012) and issuing a notification to an operator interface (1004); and
l) verifying blockchain transaction integrity using cryptographic signatures and organizational identity records stored in the organization registry (1016).
